# EUROPÄISCHE PATENTANMELDUNG

(11) **EP 2 637 287 A2**
(43) Veröffentlichungstag der Anmeldung: **11.09.2013**
(21) Anmeldenummer: 13158278.5
(22) Anmeldetag: 08.03.2013
(51) Int. Cl.: H02K 11/00, E05F 15/14

(54) **Antrieb für ein Fenster oder dergleichen sowie ein Verfahren zur Montage des Antriebs**

(30) Priorität: 09.03.2012 DE 102012203738
(71) Anmelder: GEZE GmbH, 71229 Leonberg (DE)
(72) Erfinder: Vögele, Roland, 71364 Winnenden (DE)

(57) **Zusammenfassung**

Es wird ein Antrieb für ein Fenster oder dergleichen beschrieben, mit einem Gehäuse und mit einem in dem Gehäuse angeordneten Elektromotor sowie mit einer zugeordneten Platine mit einer elektronischen Schaltungsanordnung. Die Platine ist in einem Platinenhalter angeordnet, wobei der Platinenhalter mit einem Halterahmen im Gehäuse geführt ist und mit einem Zapfen in eine Ausnehmung im Gehäuse eingreift, wobei eine am Platinenhalter festgelegte Endkappe den Platinenhalter mit dem Zapfen im Eingriff mit der Ausnehmung hält. Weiterhin wird ein Verfahren zur Montage des Antriebs angegeben.

## Beschreibung

Die Erfindung betrifft einen Antrieb für ein Fenster oder dergleichen nach dem Oberbegriff des Anspruchs 1 sowie ein Verfahren zur Montage des Antriebs nach Anspruch 10.

Aus der DE 20 2009 000 361 U1 sind Antriebe für Fenster bekannt, welche zum Antreiben und/oder Verriegeln des Fensters vorgesehen sein können. Die elektromotorischen Antriebe können zwischen dem Blendrahmen und dem Flügelrahmen angeordnet sein. Die Stromzufuhr erfolgt über eine Anschlussleitung, die über Anschlussklemmen angeschlossen ist. Die Steuereinheit ist separat von dem Antrieb angeordnet.

Aus der DE 195 14 229 A1 ist ein Antrieb für einen Flügel eines Fensters bekannt, mit einem elektrischen Antriebsmotor, welcher eine Antriebsspindel zum Bewegen des Flügels des Fensters antreibt. Im Antriebsgehäuse ist eine Lastabschaltung als elektronische Schaltung auf einer Platine angeordnet, welche in einer Endkappe des Gehäuses fixiert ist.

Größere Platinen sind möglicherweise nicht ausreichend in dem Gehäuse gesichert, so dass es zu einer Berührung leitender Bauteile mit dem Gehäuse kommen könnte.

Weiterhin offenbart die DE 196 17 083 A1 einen Antrieb für eine Tür, ein Fenster oder dergleichen, mit in einem Gehäuse des Antriebs angeordnetem Elektromotor sowie einer zugeordneten Platine mit einer elektronischen Schaltungsanordnung.

Die Anordnung und Festlegung der Platine in dem Gehäuse des Antriebs ist nicht gezeigt.

Der Erfindung liegt die Aufgabe zugrunde, einen Antrieb mit einer einfachen und zuverlässigen Anordnung einer elektronischen Schaltung in dem Antrieb und mit einer einfachen Montage zu schaffen.

Die Aufgabe wird durch die Merkmale des Anspruchs 1 sowie des Anspruchs 10 gelöst.

Die Unteransprüche bilden vorteilhafte Ausgestaltungsmöglichkeiten der Erfindung.

Antriebe, die zur Verriegelung von Flügeln von Fenstern in ein Verrieglungsgestänge, das in einer Nut des Flügels angeordnet ist, eingreifen, sind an sich bekannt. Die erfindungsgemäße Anordnung kann jedoch auch bei anderen Antrieben, wie einem Kettenantrieb oder einem Spindelantrieb, welche zum Bewegen des Flügels zwischen einer Offen- und einer Geschlossenstellung vorgesehen sind, Anwendung finden.

Der Antrieb weist neben einem Elektromotor eine auf einer Platine angeordnete elektronische Schaltungsanordnung auf, die vorteilhaft einfach und zuverlässig auf einem Platinenhalter angeordnet ist.

Anschließend an den Platinenhalter ist eine Endkappe vorgesehen. Eine Anschlussleitung wird im Bereich der Endkappe von unten in das Gehäuse geführt. Andernends ist das Gehäuse mit einer weiteren Endkappe verschließbar.

Der Platinenhalter weist stirnseitig einen im Wesentlichen den inneren Abmessungen des Gehäuses angepassten Halterahmen auf, womit der Platinenhalter im Gehäuse geführt ist. Am Halterahmen können optional Zungen angeordnet sein, welche den Elektromotor umgreifen. Am Halterahmen kann weiterhin eine Abdeckung vorgesehen sein, welche eine Welle des Elektromotors abdeckt, so dass beispielsweise ein auf der Welle des Elektromotors angeordneter Magnet mit der auf der Platine angeordneten Schaltungsanordnung einen Sensor bilden kann, der beispielsweise die Position der Verriegelung erfasst.

Andernends ist am Platinenhalter ein Befestigungsrahmen angeordnet, an welchem eine Aufnahme zur Befestigung der Endkappe vorgesehen ist. Vor dem Befestigungsrahmen ist noch eine Zugentlastung für die Anschlussleitung vorgesehen.

Zur spielfreien Anordnung des Platinenhalters im Gehäuse des Antriebs, das als rechteckiges Profilrohr ausgebildet sein kann, sind seitliche Federelemente vorgesehen, welche den Platinenhalter elastisch abstützen. Durch Gleitstege an den Federelementen wird das Einschieben des Platinenhalters in das Gehäuse erleichtert.

Vorteilhaft ist zur einfachen Montage des Antriebs an der Unterseite des Platinenhalters ein Zapfen angeordnet, der mit einer Ausnehmung im Gehäuse zusammenwirkt. Nach erfolgter Anordnung des Getriebes, des Elektromotors und des Platinenhalters mit der Platine wird die Endkappe endseitig in das Gehäuse eingesetzt, wobei sich der Platinenhalter mit der montierten Endkappe zum Einen mit dem Zapfen in der Ausnehmung im Gehäuse und zum Anderen mit der Endkappe nach oben am Gehäuse abstützt, wodurch gleichzeitig eine einfache, schnelle und zuverlässige Festlegung des Platinenhalters und Endkappe in einem Vorgang erfolgt. Denkbar ist es auch, dass am Gehäuse ein Zapfen angeordnet ist, welcher mit einer Ausnehmung im Platinenhalter zusammenwirkt.

Im Nachfolgenden wird ein Ausführungsbeispiel in der Zeichnung anhand der Figuren näher erläutert.

Dabei zeigen:
- Fig. 1: einen Antrieb mit teilweise geschnittenem Gehäuse im Bereich des Elektromotors und des Platinenhalters im Schrägbild;
- Fig. 2: eine weitere Ansicht im Schrägbild auf den Bereich des Elektromotors und des Platinenhalters mit angeordneter Endkappe, wobei das Gehäuse nicht gezeigt ist;
- Fig. 3: den Platinenhalter als Einzelteil im Schrägbild;
- Fig. 4: einen Ausschnitt eines Längsschnitts durch den Antrieb im Bereich des Platinenhalters.

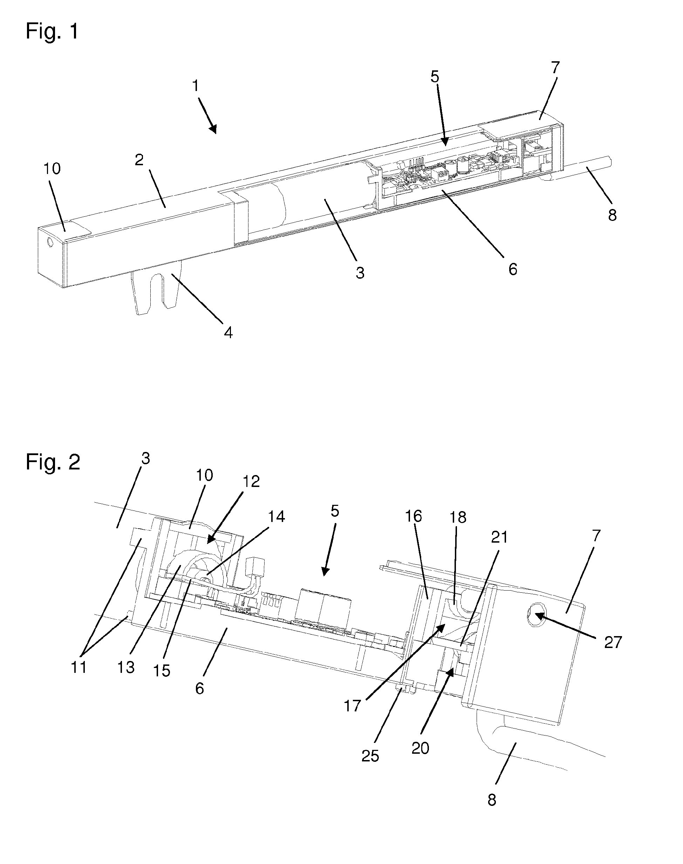

In Fig. 1 ist ein Antrieb 1 zur Verriegelung eines Flügels eines hier nicht weiter dargestellten Fensters gezeigt, der in an sich bekannter Weise in ein Verrieglungsgestänge eingreift, das üblicherweise in einer Nut des Flügels angeordnet ist.

Der Antrieb 1 weist ein Gehäuse 2 auf, in dem ein mittels eines Elektromotors 3 angetriebenes Getriebe angeordnet ist, das beispielsweise als ein Spindel- oder Zahnstangengetriebe ausgebildet ist, wodurch ein Eingreifelement 4, das mit besagtem Verriegelungsgestänge zusammenwirkt, längs des Gehäuses 2 verlagerbar ist. Das Gehäuse 2 kann vorteilhaft als Aluminium-Vierkantrohr ausgebildet sein.

Der Antrieb 1 weist weiterhin eine elektronische Schaltungsanordnung auf, die sich auf einer Platine 5 befindet, an welcher auch der elektrische Anschluss des Antriebs 1 erfolgt. Die Platine 5 ist vorteilhaft einfach und zuverlässig auf einem Platinenhalter 6 angeordnet, welcher die Platine 5 auch gegenüber dem Gehäuse 2 beabstandet und isoliert. Anschließend an den Platinenhalter 6 ist eine Endkappe 7 vorgesehen, wie es in Fig. 2 gezeigt ist. Eine Anschlussleitung 8 wird im Bereich der Endkappe 7 von unten in das Gehäuse 2 geführt. Das Gehäuse 2 ist andernends mit einer Endkappe 9 verschließbar.

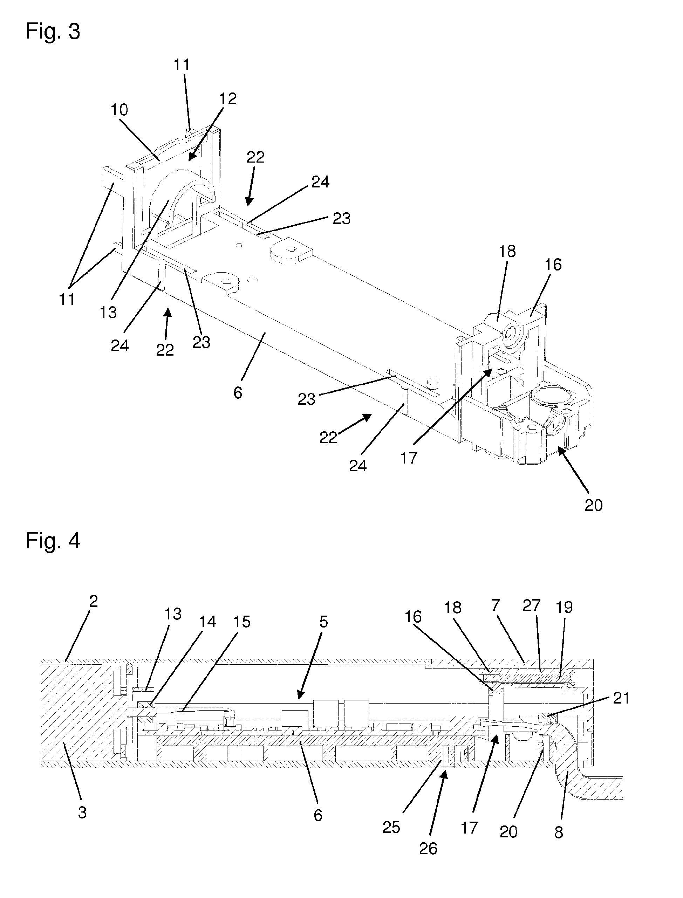

In der Fig. 3 ist der Platinenhalter 6 als Einzelteil ohne eingesetzte Platine 5 gezeigt. Einerends weist der Platinenhalter 6 stirnseitig einen im Wesentlichen den inneren Abmessungen des Gehäuses 2 angepassten Halterahmen 10 auf, welcher hier mit Zungen 11 versehen ist, die den Elektromotor 3 umgreifen. Der Halterahmen 10 führt den Platinenhalter 6 im Gehäuse 2. Innerhalb einer Aussparung 12 des Halterahmens 10 ist eine optionale Abdeckung 13 angeordnet, welche eine in Richtung auf die Platine 5 zugewandte Welle des Elektromotors 3 abdeckt, wie es in Fig. 2 gezeigt ist.

Vorteilhaft besteht durch die Anlage des Elektromotors 3 am Halterahmen 10 eine definierte Lage des Elektromotors 3 zur Platine 5, so dass beispielsweise ein auf der Welle des Elektromotors 3 angebrachter Magnet 14 direkt mit einem Sensor der auf der Platine 5 angeordneten Schaltungsanordnung einen Inkrementalgeber bilden kann, wodurch bevorzugt die Position des Eingreifelements 4 und somit die Verriegelungsstellung des Flügels des Fensters erfassbar ist. Die Abdeckung 13 schützt die Anschlussdrähte 15 des Elektromotors 3, welche durch die Aussparung 12 des Halterahmens 10 geführt sind, gegen Beschädigung, da eine Berührung der Anschlussdrähte 15 mit dem sich drehenden Magneten 14 verhindert wird. In alternativer Ausgestaltung können die Anschlussdrähte 15 auch außerhalb der Aussparung 12 um den Halterahmen 10 geführt sein.

Der Platinenhalter 6 weist auf seiner der Endkappe 7 zugewandten Seite einen Befestigungsrahmen 16 auf, mit einer Aussparung 17 zum Durchgriff der Anschlussleitung 8, welche beispielsweise mittels Steckverbinder mit der Platine 5 verbindbar ist. Weiterhin ist am oberen horizontalen Steg des Befestigungsrahmens 16 eine Aufnahme 18 zur Befestigung der Endkappe 7 mittels einer Schaube 19 vorgesehen, wie es in Fig. 4 gezeigt ist. Vor dem Befestigungsrahmen 16 ist am Platinenhalter 6 noch ein Bock 20 vorgesehen, an den ein Steg 21 angeschraubt werden kann, welche gemeinsam eine Zugentlastung für die Anschlussleitung 8 bilden.

Seitlich am Platinenhalter 6 sind Federelemente 22, welche den Platinenhalter 6 in dem Gehäuse 2 seitlich abstützen, durch die Anordnung von Schlitzen 23 realisiert. Nach außen hin ist an jedem Federelement 22 ein Gleitsteg 24 angeordnet, welcher ein Einschieben des Platinenhalters 6 in das Gehäuse 2 bei der Montage des Antriebs 1 erleichtert. Weiterhin sind am Platinenhalter 6 noch weitere Erhebungen und Aussparungen vorgesehen, welche zur Positionierung und Befestigung der Platine 5 auf dem Platinenhalter 6 vorgesehen sind. Die Platine 5 wird auf dem Platinenhalter 6 beispielsweise mittels Schrauben, Nieten oder Rastverbindungen angeordnet.

An der Unterseite des Platinenhalters 6 ist besonders vorteilhaft ein Zapfen 25 vorgesehen, der mit einer Ausnehmung 26 im Gehäuse 2 zur einfachen und schnellen Montage des Antriebs 1 zusammenwirkt.

Zur Montage des Antriebs 1 kann die Einheit aus Getriebe, Elektromotor 3 und aus Platinenhalter 6 mit Platine 5 nach Anschluss des Elektromotors 3 gemeinsam in das Gehäuse 2 eingeschoben werden, bis der auf der Unterseite des Platinenhalters 6 angeordnete Zapfen 25 in die Ausnehmung 26 im Gehäuse 2 eingreift. Das Getriebe und der Elektromotor 3 können beispielsweise durch Verschrauben im Bereich des Getriebes bzw. des Eingreifelements 4 im Gehäuse 2 festgelegt werden.

In einer weiteren Alternative kann zunächst der mit dem Getriebe versehene Elektromotor 3 in das Gehäuse 2 eingeschoben werden und ebenfalls beispielsweise durch Verschrauben im Bereich des Getriebes bzw. des Eingreifelements 4 festgelegt werden. Der Platinenhalter 6 mit angeordneter Platine 5 kann nachfolgend in das Gehäuse 2 eingeschoben werden, wobei der Anschluss des Elektromotors 3 durch Kontaktieren eines elektrischen Steckverbinders auf der Platine 5 erfolgt. Sodann kann der Platinenhalter 6 mit seinem Halterahmen 10 vollständig an den Elektromotor 3 herangeführt werden. Zur Herstellung der elektrischen Verbindung können am Elektromotor 3 alternativ auch Kontaktstifte angeordnet sein, welche durch Heranschieben des Platinenhalters 6 in zugeordnete Buchsen auf der Platine 5 eingreifen.

Der Antrieb 1 kann wahlweise gleich mit der Anschlussleitung 8 versehen werden, oder diese kann nachträglich bei der Montage des Antriebs 1 am Flügel des Fensters angebracht werden.

Der durch den Eingriff des Zapfens 25 in die Ausnehmung 26 im Gehäuse 2 in Richtung der Längserstreckung des Gehäuses 2 positionierte Platinenhalter 6 wird vorteilhaft durch die Anordnung der Endkappe 7 an dem Platinenhalter 6 in dieser Position gehalten und gesichert, wobei sich die Endkappe 7 gegenüberliegend des Zapfens 25 am Gehäuse 2 abstützt.

Die Endkappe 7 wird an dem Platinenhalter 6 festgelegt, indem die in einer Schraubenhülse 27 der Endkappe 7 aufgenommene Schraube 19 an der Aufnahme 18 am Befestigungsrahmen 16 des Platinenhalters 6 festgelegt wird. Durch diese Verbindung mit dem Platinenhalter 6 ist die Endkappe 7 ebenfalls in Richtung der Längserstreckung des Gehäuses 2 gesichert.

Somit wird durch einfaches Einsetzen des Platinenhalters 6 und dem Verschließen des Antriebs 1 mit der Endkappe 7 mit nur einer Schraube 19 mit einfachen Mitteln ein sichere und schnelle Montage von Platinenhalter 6 und Endkappe 7 erzielt.

### Liste der Referenzzeichen

| | |
|---|---|
| 1 | Antrieb |
| 2 | Gehäuse |
| 3 | Elektromotor |
| 4 | Eingreifelement |
| 5 | Platine |
| 6 | Platinenhalter |
| 7 | Endkappe |
| 8 | Anschlussleitung |
| 9 | Endkappe |
| 10 | Halterahmen |
| 11 | Zunge |
| 12 | Aussparung |
| 13 | Abdeckung |
| 14 | Magnet |
| 15 | Anschlussdraht |
| 16 | Befestigungsrahmen |
| 17 | Aussparung |
| 18 | Aufnahme |
| 19 | Schaube |
| 20 | Bock |
| 21 | Steg |
| 22 | Federelement |
| 23 | Schlitz |
| 24 | Gleitsteg |
| 25 | Zapfen |
| 26 | Ausnehmung |
| 27 | Schraubenhülse |

## Patentansprüche

1. Antrieb (1) für ein Fenster oder dergleichen, mit einem Gehäuse (2) und mit einem in dem Gehäuse (2) angeordneten Elektromotor (3) sowie mit einer zugeordneten Platine (5) mit einer elektronischen Schaltungsanordnung,
**dadurch gekennzeichnet,**
**dass** die Platine (5) in einem Platinenhalter (6) angeordnet ist, wobei der Platinenhalter (6) mit einem Halterahmen (10) im Gehäuse (2) geführt ist und mit einem Zapfen (25) in eine Ausnehmung (26) im Gehäuse (2) eingreift, wobei eine am Platinenhalter (6) festgelegte Endkappe (7) den Platinenhalter (6) mit dem Zapfen (25) im Eingriff mit der Ausnehmung (26) hält.

2. Antrieb nach Anspruch 1,
**dadurch gekennzeichnet, dass** der Halterahmen (10) eine Aussparung (12) zum Durchgriff eines auf einer Welle des Elektromotors (3) angebrachten Magneten (14) aufweist.

3. Antrieb nach Anspruch 2,
**dadurch gekennzeichnet, dass** der auf der Welle des Elektromotors (3) angebrachte Magnet (14) mit einem Sensor der auf der Platine (5) angeordneten Schaltungsanordnung einen Inkrementalgeber bildet.

4. Antrieb nach Anspruch 2,
**dadurch gekennzeichnet, dass** am Halterahmen (10) eine Abdeckung (13) vorgesehen ist, welche die Welle des Elektromotors (3) abdeckt.

5. Antrieb nach Anspruch 1,
**dadurch gekennzeichnet, dass** am Platinenhalter (6) ein Befestigungsrahmen (16) mit einer Aufnahme (18) zum Festlegen der Endkappe (7) am Platinenhalter (6) angeordnet ist.

6. Antrieb nach Anspruch 1,
**dadurch gekennzeichnet, dass** am Platinenhalter (6) ein Bock (20) angeordnet ist, welcher mit einem Steg (21) eine Zugentlastung für eine Anschlussleitung (8) bildet.

7. Antrieb nach Anspruch 5,
**dadurch gekennzeichnet, dass** der Befestigungsrahmen (16) eine Aussparung (17) zur Durchführung der Anschlussleitung (8) aufweist.

8. Antrieb nach Anspruch 1,
**dadurch gekennzeichnet, dass** am Platinenhalter (6) ein oder mehrere Federelemente (22) angeordnet sind, welche den Platinenhalter (6) im Gehäuse (2) elastisch abstützen.

9. Antrieb nach Anspruch 8,
**dadurch gekennzeichnet, dass** die Federelemente (22) durch Schlitze (23) im Platinenhalter (6) gebildet sind.

10. Verfahren zur Montage eines Antriebs nach Anspruch 1,
**gekennzeichnet durch,**
- Anordnen des mit einem Getriebe versehenen Elektromotors (3) im Gehäuse (2);
- gleichzeitiges oder anschließendes Einschieben des Platinenhalters (6) mit der Platine (5) mit Kontaktierung des Elektromotors (4) an der Platine (5);
- Einsetzen des Zapfens (25) des Platinhalters (6) in die Aussparung (26) im Gehäuse (2) des Antriebs (1);
- Festlegen des Platinenhalters (6) und der Endkappe (7) im Gehäuse (2) des Antriebs (1) **durch** Einsetzen der Endkappe (7) in das Gehäuse (2) und Festlegen der Endkappe (7) am Platinenhalter (6), wobei die Endkappe (7) den Platinenhalter (6) mit dem Zapfen (25) in der Ausnehmung (26) des Gehäuses (2) sichert.
